# EUROPEAN PATENT APPLICATION

(11) **EP 4 400 550 A1**
(43) Date of publication of application: **17.07.2024**
(21) Application number: 22867251.5
(22) Date of filing: 30.08.2022
(51) Int. Cl.: C09D 1/00, B05D 3/02, B05D 7/24, C09D 7/40, C09D 7/63

(54) **HAFNIUM COMPOUND-CONTAINING SOL-GEL SOLUTION, METHOD FOR PRODUCING HAFNIUM COMPOUND-CONTAINING SOL-GEL SOLUTION, AND METHOD FOR PRODUCING HAFNIA-CONTAINING FILM**

(30) Priority: 09.09.2021 JP 2021146772; 22.08.2022 JP 2022131694
(71) Applicant: Mitsubishi Materials Corporation, Tokyo 100-8117 (JP)
(72) Inventor: TSUJIUCHI Naoto, Sanda-shi, Hyogo 669-1339 (JP); TATSUMI Koji, Sanda-shi, Hyogo 669-1339 (JP)
(74) Representative: Hoffmann Eitle
(86) International application number: PCT/JP2022/032581
(87) International publication number: WO 2023/037929

(57) **Abstract**

A hafnium compound-containing sol-gel solution contains a lower alcohol having 5 or less carbon atoms that serves as a solvent, a hafnium compound that serves as a hafnium source, and a polyalcohol having either or both of an ether group and a N atom in a molecule, as a wettability improver. The hafnium compound-containing sol-gel solution preferably further contains a stabilizer. It is preferable that the content of the hafnium compound is regulated within a range of 0.05 mass% or more and 10 mass% or less, and the content of the polyalcohol is regulated within a range of 0.05 mass% or more and 20 mass% or less.

## Description

### TECHNICAL FIELD

The present invention relates to a hafnium compound-containing sol-gel solution that is used in the formation of a hafnia-containing film containing hafnia (also known as hafnium (IV) oxide, chemical formula: HfO₂) on a surface of a substrate, a method for producing this hafnium compound-containing sol-gel solution, and a method for producing a hafnia-containing film using this hafnium compound-containing sol-gel solution.

Priority is claimed on Japanese Patent Application No. 2021-146772, filed September 9, 2021 and Japanese Patent Application No. 2022-131694, filed August 22, 2022, the content of which is incorporated herein by reference.

### BACKGROUND ART

In the related art, the above-mentioned hafnia-containing film is formed on surfaces of various substrates as a hard coat film with high hardness or an etching mask.

As a method for forming the above-mentioned hafnia-containing film, for example, as described in Patent Documents 1 and 2, a method using a hafnium compound-containing sol-gel solution containing a hafnium compound that serves as a hafnium source is proposed.

In Patent Documents 1 and 2, a hafnium compound-containing sol-gel solution is applied onto a surface of a substrate, and a coating film of the hafnium compound-containing sol-gel solution is subjected to a curing treatment to form a hafnia-containing film.

By the way, as described in Patent Document 1, since the hafnium compound-containing sol-gel solution has low wettability with respect to a metal surface, it is difficult to form a coating film of the hafnium compound-containing sol-gel solution on the surface of the metal substrate with a uniform thickness.

Therefore, in Patent Document 1, a coating film of a hafnium compound-containing sol-gel solution is made uniform by carrying out a degreasing treatment or an electrolytic treatment on a surface of a metal substrate and then applying the hafnium compound-containing sol-gel solution thereonto.

### [Citation List]

### [Patent Documents]

[Patent Document 1]
   Japanese Unexamined Patent Application, First Publication No. 2004-267822
[Patent Document 2]
   Japanese Unexamined Patent Application, First Publication No. 2002-187738

### SUMMARY OF INVENTION

### Technical Problem

However, in the method described in Patent Document 1, it is necessary to perform a degreasing treatment or an electrolytic treatment on the surface of the metal substrate, and there is a concern that the process is complicated and the manufacturing cost increases. In addition, depending on the surface state after the degreasing treatment or the electrolytic treatment, there is a concern that the hafnium compound-containing sol-gel solution may not be uniformly applied.

Particularly, in a substrate formed of an easily oxidized metal such as aluminum, an oxide film is formed on the surface of the substrate to make the surface hydrophilic, and thus there is a concern that the hafnium compound-containing sol-gel solution may not be uniformly applied.

The present invention has been made in view of the above-mentioned circumstances, and an object of the present invention is to provide a hafnium compound-containing sol-gel solution that can be uniformly applied even onto a hydrophilic surface of a substrate, a method for producing this hafnium compound-containing sol-gel solution, and a method for producing a hafnia-containing film using this hafnium compound-containing sol-gel solution.

### Solution to Problem

In order to solve the above problems, the hafnium compound-containing sol-gel solution of an aspect 1 of the present invention contains a lower alcohol having 5 or less carbon atoms that serves as a solvent, a hafnium compound that serves as a hafnium source, and a polyalcohol having either or both of an ether group and a N atom in a molecule, as a wettability improver.

A hafnium compound-containing sol-gel solution of the aspect 1 of the present invention contains a polyalcohol having either or both of an ether group and a N atom in a molecule, as a wettability improver. Since such a polyalcohol includes a plurality of hydroxyl groups (-OH groups) in a molecule, the polyalcohol has a high affinity for a hydrophilic surface, and since the polyalcohol has either or both of an ether group (-O-) and a N atom in the molecule, the polyalcohol also has an affinity for the hafnium compound-containing sol-gel solution. Therefore, the hafnium compound-containing sol-gel solution containing such a polyalcohol can be uniformly applied onto the hydrophilic surface of the substrate.

In addition, since a hafnium compound is contained as a hafnium source, a hafnia-containing film can be formed by drying and firing the hafnium compound-containing sol-gel solution.

Furthermore, since a lower alcohol having 5 or less carbon atoms is used as a solvent, the solvent can be evaporated relatively easily, and the hafnia-containing film can be stably formed.

A hafnium compound-containing sol-gel solution of an aspect 2 of the present invention further contains a stabilizer in the aspect 1.

According to the hafnium compound-containing sol-gel solution according to the aspect 2 of the present invention, since the stabilizer is contained, deterioration of the hafnium compound-containing sol-gel solution can be suppressed and handling is improved.

In a hafnium compound-containing sol-gel solution of an aspect 3 of the present invention, in the aspect 1 or 2, the content of the hafnium compound is regulated within a range of 0.05 mass% or more and 10 mass% or less, and the content of the polyalcohol is regulated within a range of 0.05 mass% or more and 20 mass% or less.

According to the hafnium compound-containing sol-gel solution of the aspect 3 of the present invention, since the content of the hafnium compound is regulated within the above-mentioned range, a hafnia-containing film can be reliably formed by drying and firing this hafnium compound-containing sol-gel solution.

In addition, since the content of the polyalcohol is regulated within the above-mentioned range, the hafnium compound-containing sol-gel solution can be further uniformly applied onto the hydrophilic surface of the substrate.

A method for producing a hafnium compound-containing sol-gel solution of an aspect 4 of the present invention is a method for producing a hafnium compound-containing sol-gel solution for producing the hafnium compound-containing sol-gel solution of the aspects 1 to 3 of the present invention, the method includes a hafnium compound adding step of adding the hafnium compound to the lower alcohol having 5 or less carbon atoms that serves as a solvent, a refluxing step of refluxing the solvent to which the hafnium compound is added, and a polyalcohol adding step of, after cooling the solvent to room temperature, adding and mixing the polyalcohol to and with the solvent.

According to the method for producing a hafnium compound-containing sol-gel solution of the aspect 4 of the present invention, as mentioned above, since the hafnium compound that serves as a hafnium source is added to a lower alcohol that serves as a solvent and then the polyalcohol is added after cooling the mixture to room temperature, the hafnium compound and the polyalcohol can be uniformly dispersed in the solvent and the hafnium compound-containing sol-gel solution can be stably produced.

A method for producing a hafnia-containing film of an aspect 5 of the present invention is a method for producing a hafnia-containing film for forming a hafnia-containing film on a surface of a substrate, the method includes a hafnium compound-containing sol-gel solution coating step of applying the hafnium compound-containing sol-gel solution of the aspects 1 to 3 of the present invention onto the surface of the substrate, a drying step of drying the applied hafnium compound-containing sol-gel solution to form a hafnium compound-containing gel film, and a firing step of firing the hafnium compound-containing gel film to form a hafnia-containing film.

According to the method for producing a hafnia-containing film of the aspect 5 of the present invention, since the above-mentioned hafnium compound-containing sol-gel solution is used, the solution can be uniformly applied even onto the hydrophilic surface of the substrate. In addition, since the uniformly applied hafnium compound-containing sol-gel solution is dried and fired, a hafnia-containing film having a uniform thickness can be stably produced.

### ADVANTAGEOUS EFFECTS OF INVENTION

In the present invention, a hafnium compound-containing sol-gel solution that can be uniformly applied even onto a hydrophilic surface of a substrate, a method for producing this hafnium compound-containing sol-gel solution, and a method for producing a hafnia-containing film using this hafnium compound-containing sol-gel solution can be provided.

### BRIEF DESCRIPTION OF DRAWINGS

FIG. 1 is a flowchart showing a method for producing a hafnium compound-containing sol-gel solution according to an embodiment of the present invention.
FIG. 2 is a flowchart showing a method for producing a hafnia-containing film according to an embodiment of the present invention.

### DESCRIPTION OF EMBODIMENTS

Hereinafter, a hafnium compound-containing sol-gel solution, a method for producing a hafnium compound-containing sol-gel solution, and a method for producing a hafnia-containing film, which are embodiments of the present invention, is described with reference to the drawings.

The hafnium compound-containing sol-gel solution of the present embodiment contains a lower alcohol having 5 or less carbon atoms that serves as a solvent, and further contains a hafnium compound that serves as a hafnium source, and a polyalcohol having either or both of an ether group and a N atom in a molecule, as a wettability improver. In addition to these, a stabilizer may be further contained.

In the hafnium compound-containing sol-gel solution of the present embodiment, it is preferable that the content of the hafnium compound that serves as a hafnium source is regulated within a range of 0.05 mass% or more and 10 mass% or less, and the content of the polyalcohol is regulated within a range of 0.05 mass% or more and 20 mass% or less.

That is, in the composition of the hafnium compound-containing sol-gel solution of the present embodiment, it is preferable that the content of the hafnium compound is within a range of 0.05 mass% or more and 10 mass% or less, the content of the polyalcohol is within a range of 0.05 mass% or more and 20 mass% or less, the content of the stabilizer is within a range of 0 mass% or more and 20 mass% or less, and the balance is a solvent (lower alcohol having 5 or less carbon atoms). The lower alcohol is an alcohol in which in a molecule, the number of carbon atoms is 5 or less and the number of hydroxyl groups (-OH groups) is 2 or less.

Examples of the lower alcohol that serves as the solvent include monohydric alcohols such as methanol, ethanol, n-propanol, isopropanol, n-butanol, sec-butanol, isobutyl alcohol, tert-butyl alcohol, n-pentanol, 2-pentanol, 3-pentanol, 2-methyl-1-butanol, isopentyl alcohol, tert-pentyl alcohol, 3-methyl-2-butanol, and neopentyl alcohol, and dihydric alcohols such as ethylene glycol, propylene glycol, trimethylene glycol, 1,2-butanediol, 1,3-butanediol, and 1,4-butanediol. Among the lower alcohols, a plurality of kinds thereof can be mixed and used.

In the present embodiment, propanol or butanol is preferably used as the lower alcohol. Propanol and butanol may be mixed and used.

Examples of the hafnium compound that serves as the hafnium source include a hafnium compound selected from the group consisting of a hafnium halide, a hafnium halous acid salt, a hafnium hypohalogenous acid salt, a hafnium halogen acid salt, a hafnium perhalogen acid salt, a hafnium inorganic acid salt, a hafnium organic acid salt, a hafnium alkoxide, and a hafnium complex. Among the hafnium compounds, a plurality of kinds thereof can be mixed and used.

In the present embodiment, as the hafnium compound that serves as a hafnium source, a hafnium alkoxide having 5 or less carbon atoms is preferably used, and specific examples thereof include hafnium (IV) methoxide, hafnium (IV) ethoxide, hafnium (IV) propoxide, hafnium butoxide, hafnium (IV) n-butoxide, hafnium (IV) t-butoxide, hafnium (IV) pentoxide, and hafnium (IV) isopropoxide monoisopropylate, and are preferably used independently or in the form of a mixture.

By drying and firing the hafnium compound-containing sol-gel solution containing these hafnium compounds that serves as the hafnium source, hafnia (HfO₂) is formed and a hafnia-containing film is formed.

In a case where the content of the hafnium compound in the hafnium compound-containing sol-gel solution is regulated within the range of 0.05 mass% or more and 10 mass% or less, hafnia is sufficiently formed by drying and firing the hafnium compound-containing sol-gel solution and the hafnia-containing film can be reliably formed. In a case where the content thereof is less than 0.05 mass%, there is a possibility that the amount of hafnia formed after the firing is insufficient. In a case where the content thereof is more than 10 mass%, there is a possibility that it is difficult to uniformly apply the sol-gel solution and it is difficult to produce a hafnia-containing film having a uniform thickness.

The lower limit of the content of the hafnium compound is more preferably regulated to 0.1 mass% or more and even more preferably regulated to 0.2 mass% or more. On the other hand, the upper limit of the content of the hafnium compound is more preferably regulated to 8 mass% or less and even more preferably regulated to 5 mass% or less.

As the polyalcohol having either or both of an ether group and a N atom in a molecule, which serves the wettability improver, for example, diethylene glycol, triethylene glycol, tetraethylene glycol, diglycerol, dipentaerythritol, triethanolamine, diethanolamine, ethanolamine, heptanolamine, methanolamine, dimethyldiethanolamine, dimethylethanolamine, N-methylethanolamine, or the like is preferably used. Among the above polyalcohols, a plurality of kinds can be mixed and used.

Since the polyalcohol having either or both of an ether group and a N atom in a molecule includes a plurality of hydroxyl groups (-OH groups) in the molecule, the polyalcohol has a high affinity for a hydrophilic surface, and since the polyalcohol has either or both of an ether group (-O-) and a N atom in the molecule, the polyalcohol also has an affinity for the hafnium compound-containing sol-gel solution. Therefore, the hafnium compound-containing sol-gel solution containing such a polyalcohol can be uniformly applied to the hydrophilic surface of the substrate.

In a case where the content of the polyalcohol having either or both of an ether group and a N atom in a molecule in the hafnium compound-containing sol-gel solution is regulated within a range of 0.05 mass% or more and 20 mass% or less, the wettability can be sufficiently improved and the hafnium compound-containing sol-gel solution can be uniformly applied onto the hydrophilic surface of the substrate. In a case where the content of the polyalcohol is less than 0.05 mass%, it is difficult to sufficiently improve the wettability, and in a case where the content of the polyalcohol is more than 20 mass%, there is a possibility that the amount of hafnia formed after the firing is relatively insufficient.

The lower limit of the content of the polyalcohol having either or both of an ether group and a N atom in a molecule is more preferably regulated to 0.1 mass% or more and even more preferably regulated to 0.2 mass% or more. On the other hand, the upper limit of the content of the polyalcohol having either or both of an ether group and a N atom in a molecule is more preferably regulated to 10 mass% or less and even more preferably regulated to 5 mass% or less.

As the stabilizer, for example, acetyl acetone, ethyl acetoacetate, acetoin, hydroxyacetone, malonic acid, acetic acid, acetic anhydride, lactic acid, oxalic acid, citric acid, tartaric acid, or the like is preferably used. Among the above stabilizers, a plurality of kinds can be mixed and used.

By adding a stabilizer to the hafnium compound-containing sol-gel solution, deterioration of the hafnium compound-containing sol-gel solution can be suppressed, and handleability of the hafnium compound-containing sol-gel solution can be improved. Therefore, a stabilizer may be appropriately added as necessary.

The content of the stabilizer in the hafnium compound-containing sol-gel solution is preferably regulated within a range of 0 mass% or more and 10 mass% or less. Even in a case where the content of the stabilizer is more than 10 mass%, the effect is unlikely to be further improved, which leads to an unnecessary increase in costs.

The lower limit of the content of the stabilizer is more preferably regulated to 0.05 mass% or more and even more preferably regulated to 0.1 mass% or more. On the other hand, the upper limit of the content of the stabilizer is more preferably regulated to 8 mass% or less and even more preferably regulated to 5 mass% or less.

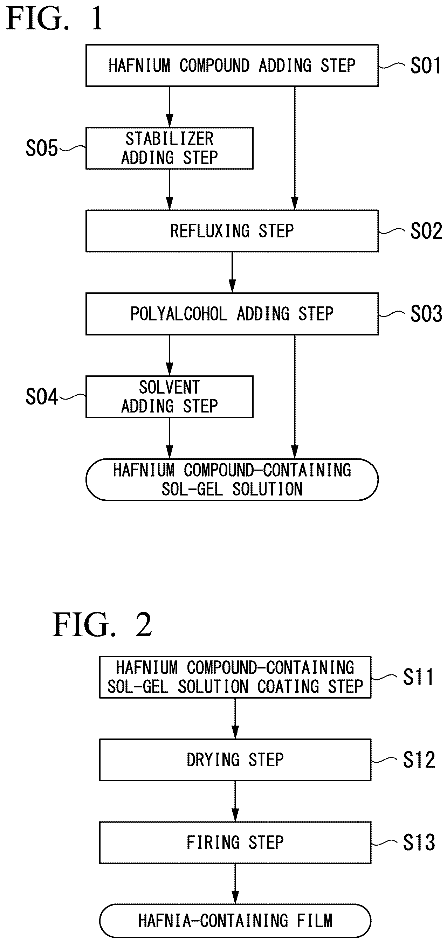

Next, the method for producing the hafnium compound-containing sol-gel solution of the present embodiment mentioned above is described with reference to a flowchart of FIG. 1.

The method for producing a hafnium compound-containing sol-gel solution of the present embodiment, as shown in FIG. 1, includes a hafnium compound adding step S01 of adding a hafnium compound to a lower alcohol having 5 or less carbon atoms that serves as a solvent, a refluxing step S02 of refluxing the solvent to which a hafnium compound that serves as a hafnium source is added, and a polyalcohol adding step S03 of, after cooling the solvent to room temperature, adding and mixing a polyalcohol having either or both of an ether group and a N atom in a molecule to and with the solvent. In order to adjust the composition, a solvent adding step S04 of adding a solvent may be provided after the polyalcohol adding step S03. In addition, in a case where a stabilizer is added, a stabilizer adding step S05 of adding a stabilizer is provided between the hafnium compound adding step S01 and the refluxing step S02.

In the hafnium compound adding step S01, the hafnium compound is added to the solvent in a state where the lower alcohol that serves as the solvent is heated and stirred.

The atmosphere in a case of adding the hafnium compound is preferably a non-oxidizing atmosphere, and is regulated to a nitrogen atmosphere in the present embodiment.

In addition, the temperature of the lower alcohol in a case of adding the hafnium compound is not limited, but is preferably regulated within a range of 5°C or more and 40°C or less.

In the refluxing step S02, the solvent to which the hafnium compound is added is heated while being stirred to perform a reflux treatment.

The heating temperature in the refluxing step S02 is not limited, but is preferably regulated within a range of 80°C or more and 200°C or less. In addition, the holding time at the heating temperature is not limited, but is preferably regulated within a range of 0.5 hours or more and 5 hours or less.

In a case where a stabilizer is added, the stabilizer adding step S05 is preferably carried out before the refluxing step S02.

In the polyalcohol adding step S03, after the solvent in which the refluxing step S02 has been carried out is cooled to room temperature (for example, within a range of 20°C or more and 30°C or less), which is not limited, a polyalcohol having either or both of an ether group and a N atom in a molecule is added to the solvent, and the mixture is stirred and mixed.

In the solvent adding step S04, in order to adjust the composition of the hafnium compound-containing sol-gel solution, a lower alcohol that serves as a solvent is added thereto.

By the steps above, the hafnium compound-containing sol-gel solution of the present embodiment is produced.

Next, a method for producing a hafnia-containing film using the hafnium compound-containing sol-gel solution of the present embodiment mentioned above is described with reference to a flowchart of FIG. 2.

The method for producing a hafnia-containing film of the present embodiment, as shown in FIG. 2, includes a hafnium compound-containing sol-gel solution coating step S11 of applying the hafnium compound-containing sol-gel solution of the present embodiment onto a surface of a substrate, a drying step S12 of drying the applied hafnium compound-containing sol-gel solution to form a hafnium compound-containing gel film, and a firing step S13 of firing the hafnium compound-containing gel film to form a hafnia-containing film.

In the present embodiment, the substrate on which the hafnia-containing film is formed is a metal substrate, but is not limited to a single kind of metal and may be an alloy, a semiconductor, ceramics, or the like. The effect of the present invention is particularly remarkable in a case where the substrate is a substrate in which a hydrophilic film such as an oxide film is formed on the surface of the substrate or a substrate having hydrophilicity on the surface of the substrate.

In addition, unevenness (rough surface) may be formed on the surface of the substrate by a blast treatment, an etching treatment, or the like.

As the substrate, single metals such as aluminum, titanium, iron, nickel, zinc, magnesium, and copper, alloys thereof, or oxides thereof, element semiconductors such as silicon and gallium, or compound semiconductors such as silicon oxide, silicon nitride, silicon carbide, indium phosphide, gallium nitride, gallium arsenic, and gallium oxide can also be used.

In the hafnium compound-containing sol-gel solution coating step S11, the hafnium compound-containing sol-gel solution of the present embodiment is applied onto the surface of the substrate. At this time, the coating method is not particularly limited, and a spray method, a dip method, or the like may be used, but in the present embodiment, the hafnium compound-containing sol-gel solution is applied by spin coating.

Since the hafnium compound-containing sol-gel solution of the present embodiment contains a polyalcohol having either or both of an ether group and a N atom in a molecule as mentioned above, the solution can be uniformly applied even onto the hydrophilic surface of the substrate.

In this hafnium compound-containing sol-gel solution coating step S11, the hafnium compound-containing sol-gel solution (containing a polyalcohol having either or both of an ether group and a N atom in a molecule as the wetting improver) of the present embodiment is initially applied onto the surface of the substrate, and thereafter a hafnium compound-containing sol-gel solution for overcoating is applied thereonto.

The hafnium compound-containing sol-gel solution for overcoating may contain the above-mentioned wetting improver or may not contain the wetting improver.

In addition, as the hafnium compound-containing sol-gel solution for overcoating, it is preferable to use the sol-gel solution having a higher content of the hafnium compound than that of the hafnium compound-containing sol-gel solution of the present embodiment.

In the drying step S12, the hafnium compound-containing sol-gel solution applied onto the surface of the substrate is dried to form a hafnium compound-containing gel film. Since in the hafnium compound-containing sol-gel solution of the present embodiment, a lower alcohol having 5 or less carbon atoms is used as a solvent, the solvent can be relatively easily evaporated by the drying step S12.

The heating conditions in this drying step S12 are not limited, but conditions in which in the air or an oxygen atmosphere, the heating temperature is regulated within a range of 100°C or more and 400°C or less, and the holding time at the heating temperature is regulated within a range of 0.5 minutes or more and 10 minutes or less are preferable.

By repeatedly performing the hafnium compound-containing sol-gel solution coating step S11 and the drying step S12, a hafnium compound-containing gel film having a predetermined thickness may be formed.

In the firing step S13, the hafnium compound-containing gel film is heated and fired to form a hafnia-containing film.

The heating conditions in the firing step S13 are not limited, but conditions in which in the air or an oxygen atmosphere, the heating temperature is regulated within a range of 400°C or more and 1,000°C or less, and the holding time at the heating temperature is regulated within a range of 0.5 minutes or more and 10 minutes or less are preferable.

In a case where the hafnium compound-containing sol-gel solution coating step S11 and the drying step S12 are repeatedly carried out, the firing step S13 may be carried out after each drying step S12.

By the steps above, a hafnia-containing film is produced on the surface of the substrate.

According to the hafnium compound-containing sol-gel solution of the present embodiment, since the polyalcohol having either or both of an ether group and a N atom in the molecule is contained as the wettability improver, the hafnium compound-containing sol-gel solution has a high affinity for a hydrophilic surface and can be uniformly applied onto the hydrophilic surface of the substrate in the hafnium compound-containing sol-gel solution coating step S11.

In addition, since a hafnium compound is contained as a hafnium source, a hafnia-containing film can be formed by drying and firing the hafnium compound-containing sol-gel solution.

In addition, since a lower alcohol having 5 or less carbon atoms is used as the solvent, it is possible to evaporate the solvent relatively easily in the drying step S12 and to stably form the hafnia-containing film.

In a case where a stabilizer is further contained in the hafnium compound-containing sol-gel solution of the present embodiment, deterioration of the hafnium compound-containing sol-gel solution can be suppressed, and the hafnium compound-containing sol-gel solution can be easily handled.

In addition, in a case where in the hafnium compound-containing sol-gel solution of the present embodiment, the content of the hafnium compound is regulated within a range of 0.05 mass% or more and 10 mass% or less, and the content of the polyalcohol is regulated within a range of 0.05 mass% or more and 20 mass% or less, by drying and firing the hafnium compound-containing sol-gel solution, the hafnia-containing film is reliably formed and the hafnium compound-containing sol-gel solution can be further uniformly applied onto the hydrophilic surface of the substrate.

According to the method for producing a hafnium compound-containing sol-gel solution of the present embodiment, as mentioned above, the hafnium compound adding step S01 of adding a hafnium compound to a lower alcohol having 5 or less carbon atoms that serves as a solvent, the refluxing step S02 of refluxing the solvent to which a hafnium compound is added, and the polyalcohol adding step S03 of, after cooling the solvent to room temperature, adding and mixing a polyalcohol are provided. Therefore, the hafnium compound and the polyalcohol can be uniformly dispersed in the solvent and the hafnium compound-containing sol-gel solution can be stably produced.

In addition, in a case where the stabilizer adding step S05 is provided, deterioration of the hafnium compound-containing sol-gel solution can be suppressed.

According to the method for producing a hafnia-containing film of the present embodiment, the hafnium compound-containing sol-gel solution coating step S11 of applying the hafnium compound-containing sol-gel solution of the present embodiment onto a surface of a substrate, the drying step S12 of drying the applied hafnium compound-containing sol-gel solution to form a hafnium compound-containing gel film, and the firing step S13 of firing the hafnium compound-containing gel film to form a hafnia-containing film are provided. Therefore, the hafnium compound-containing sol-gel solution can be uniformly applied onto the hydrophilic surface of the substrate, and the hafnia-containing film having a uniform thickness can be stably produced.

Although the embodiments of the present invention are described above, the present invention is not limited thereto, and can be appropriately modified without departing from the technical idea of the invention.

### EXAMPLES

Hereinafter, the results of the experiment performed to confirm the effectiveness of the present invention is described.

In a nitrogen atmosphere, the solvent shown in Table 1 was heated to a temperature shown in Table 2 and stirred, and the hafnium compound shown in Table 1 was added thereto.

Next, after adding a stabilizer shown in Table 1, a reflux treatment was carried out under conditions shown in Table 2. Thereafter, after cooling the mixture to room temperature, the wetting improver shown in Table 1 was added thereto and mixed by stirring. Then, a lower alcohol that serves as a solvent was further added thereto to adjust the composition.

As a result, hafnium compound-containing sol-gel solutions of Inventive Examples and Comparative Examples were produced. In order to use in a standard in a case of the wettability evaluation mentioned below, a hafnium compound-containing sol-gel solution was produced under the same composition and condition as each of Inventive Examples and Comparative Examples except that a wettability improver was not added.

The wettability of the hafnium compound-containing sol-gel solutions of Inventive Examples and Comparative Examples on the hydrophilic surface of the substrate was evaluated as follows.

Aluminum alloy substrates (A5052) having a 50 mm square and a thickness of 2 mm were prepared as substrates. The surface of each substrates was subjected to a blast treatment using SiC powder to form an uneven surface (rough surface) having a surface roughness (arithmetic mean roughness) Ra of 2 µm.

By blasting the substrate to form an uneven surface, the reflected light from the substrate can be suppressed, and thus the area ratio of the wet spreading can be easily evaluated in terms of color difference. In addition, by making the surface having a large surface area and being less likely to spread wettably, the difference in the wettability of each sample becomes remarkable.

0.1 mL of the hafnium compound-containing sol-gel solution was added dropwise to the central portion of the blasted surface of the substrate after the blast treatment. The dropped hafnium compound-containing sol-gel solution spread wettably on the substrate by surface tension.

After allowing to stand for 5 minutes after dropping, the area where the hafnium compound-containing sol-gel solution was spread wettably was measured using the area measuring function of the optical microscope. The same evaluation was performed three times, and an average value was calculated.

A case where the rate of increase in the wettability spread area was 20% or more as compared with the hafnium compound-containing sol-gel solution to which the wetting improver was not added was determined as the improvement effect is "present".

A case where the rate of increase in the wettability spread area was less than 20% as compared with the hafnium compound-containing sol-gel solution to which the wetting improver was not added was determined as the improvement effect is "absent". The evaluation results are shown in Table 2.

**[Table 1]**

| | | Solvent | | Hafnium compound | | Wettability improver | | | | | Stabilizer | |
|---|---|---|---|---|---|---|---|---|---|---|---|---|
| | | Type | Content (mass%) | Type | Content (mass%) | Type | Ether group | Hydroxyl group | N atom | Content (mass%) | Type | Content (mass%) |
| Inventive Example | 1 | n-Butanol | Balance | Hafnium(IV) n-butoxide | 3 | Diethylene glycol | 1 | 2 | - | 0.05 | Acetylacetone | 2 |
| | 2 | n-Butanol | Balance | Hafnium(IV) n-butoxide | 3 | Diethylene glycol | 1 | 2 | - | 0.5 | Acetylacetone | 2 |
| | 3 | n-Butanol | Balance | Hafnium(IV) n-butoxide | 3 | Diethylene glycol | 1 | 2 | - | 1 | Acetylacetone | 2 |
| | 4 | n-Butanol | Balance | Hafnium(IV) n-butoxide | 3 | Diethylene glycol | 1 | 2 | - | 5 | Acetylacetone | 2 |
| | 5 | n-Butanol | Balance | Hafnium(IV) n-butoxide | 3 | Diethylene glycol | 1 | 2 | - | 10 | Acetylacetone | 2 |
| | 6 | n-Butanol | Balance | Hafnium(IV) n-butoxide | 3 | Diethylene glycol | 1 | 2 | - | 20 | Acetylacetone | 2 |
| | 7 | n-Butanol | Balance | Hafnium(IV) n-butoxide | 3 | Diethylene glycol | 1 | 2 | - | 5 | - | - |
| | 8 | Methanol | Balance | Hafnium(IV) n-butoxide | 10 | Triethylene glycol | 1 | 2 | - | 10 | Ethyl acetoacetate | 2 |
| | 9 | Ethanol | Balance | Hafnium(IV) ethoxide | 5 | Tetraethylene glycol | 2 | 2 | - | 10 | Ethyl acetoacetate | 2 |
| | 10 | Isopropanol | Balance | Hafnium(IV) isopropoxide monoisopropylate | 1 | Diglycerol | 3 | 2 | - | 10 | Acetoin | 2 |
| | 11 | tert-Butanol | Balance | Hafnium(IV) n-butoxide | 0.05 | Dipentaerythritol | 1 | 4 | - | 10 | Acetoin | 2 |
| | 12 | n-Butanol | Balance | Hafnium(IV) n-butoxide | 3 | Triethanolamine | - | 3 | 1 | 5 | Acetylacetone | 2 |
| | 13 | n-Butanol | Balance | Hafnium(IV) n-butoxide | 3 | Diethanolamine | - | 2 | 1 | 5 | Acetylacetone | 2 |
| Comparative Example | 1 | n-Butanol | Balance | Hafnium(IV) n-butoxide | 3 | Ethylene glycol | 0 | 2 | - | 10 | Acetylacetone | 2 |
| | 2 | n-Butanol | Balance | Hafnium(IV) n-butoxide | 3 | Diethylene glycol monomethyl ether | 2 | 1 | - | 10 | Acetylacetone | 2 |
| | 3 | n-Butanol | Balance | Hafnium(IV) n-butoxide | 3 | Diethylene glycol methyl ether | 3 | 0 | - | 10 | Acetylacetone | 2 |
| | 4 | n-Butanol | Balance | Hafnium(IV) n-butoxide | 3 | Glycerin | 0 | 3 | - | 10 | Acetylacetone | 2 |

**[Table 2]**

| | | Hafnium compound adding step | Refluxing step | | Evaluation | |
|---|---|---|---|---|---|---|
| | | Temperature (°C) | Heating temperature (°C) | Holding time (h) | Rate of wettability spread area (%) | Improvement effect |
| Inventive Example | 1 | 25 | 140 | 1.0 | 122 | Present |
| | 2 | 25 | 140 | 1.0 | 150 | Present |
| | 3 | 25 | 140 | 1.0 | 163 | Present |
| | 4 | 25 | 140 | 1.0 | 170 | Present |
| | 5 | 25 | 140 | 1.0 | 156 | Present |
| | 6 | 25 | 140 | 1.0 | 125 | Present |
| | 7 | 25 | 140 | 1.0 | 173 | Present |
| | 8 | 5 | 80 | 0.5 | 178 | Present |
| | 9 | 20 | 120 | 1.0 | 180 | Present |
| | 10 | 30 | 160 | 3.0 | 164 | Present |
| | 11 | 40 | 200 | 5.0 | 143 | Present |
| | 12 | 25 | 140 | 1.0 | 132 | Present |
| | 13 | 25 | 140 | 1.0 | 145 | Present |
| Comparative Example | 1 | 25 | 140 | 1.0 | 98 | Absent |
| | 2 | 25 | 140 | 1.0 | 108 | Absent |
| | 3 | 25 | 140 | 1.0 | 102 | Absent |
| | 4 | 25 | 140 | 1.0 | 103 | Absent |

In Comparative Example 1, ethylene glycol having no ether group in the molecule was added as a wetting improver, but it was not possible to improve the wettability.

In Comparative Example 2, diethylene glycol monomethyl ether having one hydroxyl group in the molecule was added as a wetting improver, but it was not possible to sufficiently improve the wettability.

In Comparative Example 3, diethylene glycol methyl ether having no hydroxyl group in the molecule was added as a wetting improver, but it was not possible to sufficiently improve the wettability.

In Comparative Example 4, glycerin having no ether group and having no N atom in the molecule was added as a wetting improver, but it was not possible to sufficiently improve the wettability.

On the other hand, in Inventive Examples 1-13, a polyalcohol having either or both of an ether group and a N atom in the molecule was added as a wetting improver, and it was confirmed that the wettability is sufficiently improved.

Therefore, according to Inventive Examples, it was confirmed that it is possible to provide a hafnium compound-containing sol-gel solution that can be uniformly applied even onto the hydrophilic surface of the substrate.

### INDUSTRIAL APPLICABILITY

In the present invention, a hafnium compound-containing sol-gel solution that can be uniformly applied even onto a hydrophilic surface of a substrate, a method for producing this hafnium compound-containing sol-gel solution, and a method for producing a hafnia-containing film using this hafnium compound-containing sol-gel solution can be provided. Accordingly, the present invention can be used industrially.

## Claims

1. A hafnium compound-containing sol-gel solution comprising:
a lower alcohol having 5 or less carbon atoms that serves as a solvent;
a hafnium compound that serves as a hafnium source; and
a polyalcohol having either or both of an ether group and a N atom in a molecule, as a wettability improver.

2. The hafnium compound-containing sol-gel solution according to Claim 1, further comprising a stabilizer.

3. The hafnium compound-containing sol-gel solution according to Claim 1,
wherein a content of the hafnium compound is regulated within a range of 0.05 mass% or more and 10 mass% or less, and
a content of the polyalcohol is regulated within a range of 0.05 mass% or more and 20 mass% or less.

4. A method for producing a hafnium compound-containing sol-gel solution, for producing the hafnium compound-containing sol-gel solution according to any one of Claims 1 to 3, the method comprising:
a hafnium compound adding step of adding the hafnium compound to the lower alcohol having 5 or less carbon atoms that serves as a solvent;
a refluxing step of refluxing the solvent to which the hafnium compound is added; and
a polyalcohol adding step of, after cooling the solvent to room temperature, adding and mixing the polyalcohol to and with the solvent.

5. A method for producing a hafnia-containing film, for forming a hafnia-containing film on a surface of a substrate, the method comprising:
a hafnium compound-containing sol-gel solution coating step of applying the hafnium compound-containing sol-gel solution according to any one of Claims 1 to 3 onto the surface of the substrate;
a drying step of drying the applied hafnium compound-containing sol-gel solution to form a hafnium compound-containing gel film; and
a firing step of firing the hafnium compound-containing gel film to form a hafnia-containing film.
